# EUROPÄISCHE PATENTSCHRIFT

(11) **EP 2 902 859 B1**
(45) Veröffentlichungstag und Bekanntmachung des Hinweises auf die Patenterteilung: **11.03.2020**
(21) Anmeldenummer: 13186462.1
(22) Anmeldetag: 27.09.2013
(51) Int. Cl.: G05B 19/4093, G05B 19/19, B25J 9/16

(54) **Steuereinrichtung mit integriertem Optimierer**
Control device with integrated optimiser
Dispositif de commande avec optimisateur intégré

(43) Veröffentlichungstag der Anmeldung: 05.08.2015
(73) Patentinhaber: Siemens Aktiengesellschaft, 80333 München (DE)
(72) Erfinder: Hamm, Carsten, 91058 Erlangen (DE); Linke, Hartmut, 91056 Erlangen (DE); Puchtler, Thomas, 91325 Adelsdorf (DE); Reichl, Gerald, 91056 Erlangen (DE); Schäfers, Elmar, 90763 Fürth (DE); Teuchert, Matthias, 91056 Erlangen (DE)

(56) Entgegenhaltungen:
- EP-A2- 2 093 002
- DE-A1-102010 010 105
- US-A1- 2013 013 110
- US-B1- 6 505 085

## Beschreibung

Die Erfindung wird durch die unabhängigen Ansprüche definiert. Weitere Ausführungsformen sind in den abhängigen Ansprüchen definiert. Während verschiedene Ausführungsformen und / oder Beispiele in dieser Beschreibung offenbart wurden, ist der Gegenstand, für den Schutz begehrt wird, streng und ausschließlich auf jene Ausführungsformen und / oder Beispiele beschränkt, die vom Umfang der beigefügten Ansprüche umfasst sind.

Die vorliegende Erfindung betrifft eine Steuereinrichtung für eine Maschine mit mindestens einer Achse, wobei die Steuereinrichtung derart ausgebildet ist, dass sie
- erste Parameter entgegennimmt,
- anhand der ersten Parameter ein erstes allgemeines technologisches Problem zu einem ersten speziellen technologischen Problem konkretisiert,
- für eine Sequenz von Werten einer Lage oder einer zeitlichen Ableitung der Lage der Achse der Maschine jeweils eine Anzahl von dem jeweiligen Wert zugeordneten Variablen ermittelt, so dass bei Ansteuerung der Maschine durch die Steuereinrichtung das erste spezielle technologische Problem gelöst wird,
- einen ersten Ausführungsbefehl entgegennimmt,
- aufgrund des ersten Ausführungsbefehls die Sequenz von Werten an die Achse ausgibt und
- beim Ausgeben des jeweiligen Wertes die Maschine entsprechend der Anzahl von dem jeweiligen Wert zugeordneten Variablen ansteuert.

Die vorliegende Erfindung betrifft weiterhin ein Systemprogramm, das Maschinencode umfasst, der von einer Steuereinrichtung für eine Maschine mit mindestens einer Achse abarbeitbar ist, wobei die Abarbeitung des Maschinencodes durch die Steuereinrichtung bewirkt, dass die Steuereinrichtung entsprechend ausgebildet wird.

Die vorliegende Erfindung betrifft weiterhin eine Steuereinrichtung für eine Maschine mit mindestens einer Achse, wobei die Steuereinrichtung mit einem derartigen Computerprogramm programmiert ist.

Die vorliegende Erfindung betrifft weiterhin eine Maschine mit mindestens einer Achse und einer derartigen Steuereinrichtung.

Derartige Steuereinrichtungen sind allgemein bekannt. Beispielsweise ist bei numerischen Steuerungen bekannt, dass der Bediener der numerischen Steuerung einfache Konturen wie beispielsweise sogenannte Taschen selbst parametrieren kann. Eine derartige Parametrierung wird in einem derartigen Fall in das von der numerischen Steuerung abgearbeitete Teileprogramm übernommen und im Rahmen der Abarbeitung des Teileprogramms berücksichtigt. Im Sinne der vorliegenden Erfindung entspräche die Tasche einem ersten allgemeinen technologischen Problem. Lage und Abmessungen der Tasche entsprechen den ersten Parametern. Im Rahmen dieser Vorgehensweise sind die Werte der Achse Lagesollwerte. Die zugeordneten Variablen sind die Lagesollwerte anderer Achsen. Weiterhin erfolgt die Ermittlung der den Werten der Achse zugeordneten Variablen bei der Abarbeitung des Teileprogramms.

Die Vorgabe von Bewegungen in Steuerungssystemen für lagegeregelte Achsen (motion control) erfolgt in der Regel durch die Vorgabe einer definierten Geometrie, d.h. einer abzufahrenden Bahn. Die Sollwerte für die lagegeregelten Achsen werden im Stand der Technik vom Bediener derart generiert, dass die Kinematik der Maschine die vom Bediener festgelegte Geometrie abfährt. Die Sollwerte sind in der Regel auf einen Bahnparameter (die Bogenlänge) der abzufahrenden Trajektorie definiert. Beispielsweise bei Werkzeugmaschinen wird in der Regel die Bewegung des TCP (tool center point) definiert, nicht aber die Bewegung der einzelnen Maschinenachsen. Die Umsetzung in die Lagesollwerte der einzelnen Maschinenachsen wird durch die Steuereinrichtung vorgenommen.

Im Bereich von Bewegungssteuerungen ist der Bezug zwischen den lagegeregelten Achsen in der Regel in Form von Kurvenscheiben definiert. Nachteilig bei dieser Definition ist oftmals, dass der Bediener die Bewegung in einer Genauigkeit spezifizieren muss, die, soweit es die eigentlich zu lösende Automatisierungsaufgabe betrifft, eigentlich gar nicht erforderlich ist. So ist es bei Handlingaufgaben zwar beispielsweise erforderlich, ein Endglied eines Manipulators von A nach B zu verfahren und hierbei zur Vermeidung von Kollisionen eine Störkontur zu umfahren. Der genaue Weg ist hingegen irrelevant.

Ähnliche Probleme treten auch bei anderen technologischen Sachverhalten auf. Bei einer Servopresse möchte der Bediener beispielsweise die Umformgeschwindigkeit und die Hubzahl (also die Zahl von Iterationen pro Sekunde oder pro Minute) spezifizieren, nicht aber eine Drehzahl über einen Winkel. Auch bei anderen technologischen Problemen treten derartige Sachverhalte auf, bei denen die vom Bediener gewünschten technologischen Größen nicht ohne weiteres in die Achsbewegungen der lagegeregelten Achse umgesetzt werden können.

Für Servopressen ist bereits heute ein Algorithmus bekannt, mittels dessen anhand vorgegebener technologischer Parameter eine optimale Steuerung der Servopresse ermittelt werden kann. Dieser Algorithmus ist speziell auf die Ermittlung der optimalen Steuerung einer Servopresse ausgelegt. Er wird offline, d.h. außerhalb der Steuereinrichtung, ausgeführt. Die ermittelten, den Lagesollwerten zugeordneten Variablen werden in einer Datei abgespeichert, welche dann in die Steuereinrichtung eingespeichert wird. Eine Abänderung der Datei durch den Bediener der Steuereinrichtung ist nicht mehr möglich.

Weiterhin sind auch vergleichbare Problemstellungen bekannt, bei denen die Werte der Achse nicht Lagewerte, sondern Geschwindigkeitswerte oder - im Einzelfall - Beschleunigungswerte sind.

Aus der US 6 505 085 B1 ist eine Steuereinrichtung für eine Maschine mit mindestens einer Achse bekannt, wobei die Steuereinrichtung derart ausgebildet ist, dass sie Parameter entgegennimmt und anhand der Parameter ein allgemeines technologisches Problem zu einem speziellen technologischen Problem konkretisiert. Unter Lösung eines Optimierungsproblems ermittelt die Steuereinrichtung eine Anzahl von Steuersignalen und die zugehörigen Steuerzeitpunkte, so dass bei Ansteuerung der Maschine durch die Steuereinrichtung das spezielle technologische Problem gemäß einem Optimierungskriterium in optimaler Weise gelöst wird. Die Steuereinrichtung hinterlegt zumindest die Steuerzeitpunkte in einem Speicher. Die Steuereinrichtung gibt die Steuersignale zu den zugehörigen Steuerzeitpunkten an die Achse aus und steuert diese dadurch entsprechend an.

Die Aufgabe der vorliegenden Erfindung besteht darin, Möglichkeiten zu schaffen, so dass die Steuereinrichtung selbst aufgrund der entsprechenden Variablen eine optimale Steuerung des technologischen Problems ermitteln kann.

Die Aufgabe wird durch eine Steuereinrichtung mit den Merkmalen des Anspruchs 1 gelöst. Vorteilhafte Ausgestaltungen der erfindungsgemäßen Steuereinrichtung sind Gegenstand der abhängigen Ansprüche 2 bis 6.

Erfindungsgemäß wird eine Steuereinrichtung der eingangs genannten Art dadurch weiter ausgestaltet, dass sie
- anhand des ersten speziellen technologischen Problems eine erste Parametrierung eines Optimierungsproblems ermittelt,
- anhand des mit der ersten Parametrierung parametrierten Optimierungsproblems innerhalb der Steuereinrichtung mittels eines Optimierers erste Gruppen von optimierten Größen ermittelt,
- die den Werten zugeordneten Variablen anhand je einer ersten Gruppe von optimierten Größen einmalig vorab ermittelt, so dass bei Ansteuerung der Maschine durch die Steuereinrichtung das erste technologische Problem gemäß einem Optimierungskriterium in optimaler Weise gelöst wird,
- die zugeordneten Variablen unter Zuordnung zum jeweiligen Wert in einem Speicher hinterlegt und
- den ersten Ausführungsbefehl erst nach dem Hinterlegen der zugeordneten Variablen entgegennimmt.

Dadurch wird es ermöglicht, die Automatisierungsaufgabe (= das erste technologische Problem) zu parametrieren (= konkretisieren) und von der Steuereinrichtung einmalig vorab die den Werten der Achse zugeordneten Variablen ermitteln und abspeichern zu lassen, so dass sie für spätere Vorgänge jederzeit zur Verfügung stehen.

Die Vorgabe der ersten Parameter und/oder des ersten Ausführungsbefehls kann beispielsweise über eine Mensch-Maschine-Schnittstelle erfolgen. Alternativ ist es möglich, dass die ersten Parameter und/oder der erste Ausführungsbefehl der Steuereinrichtung aus einem Be- oder Verarbeitungsprozess oder aufgrund sich ändernder Randbedingungen automatisch bestimmt und der Steuereinrichtung zugeführt werden.

In einer möglichen Ausgestaltung der vorliegenden Erfindung ist die Anzahl an dem jeweiligen Wert zugeordneten Variablen gleich 1 und ist die dem jeweiligen Wert zugeordnete Variable eine Ableitung des Wertes nach dem Ort oder der Zeit. Diese Ausgestaltung kann insbesondere bei Servopressen Anwendung finden.

Alternativ ist es möglich, dass die Werte Lagesollwerte der Achse sind und dass die dem jeweiligen Lagesollwert zugeordneten Variablen einen jeweiligen Lagesollwert einer weiteren lagegeregelten Achse umfassen. In diesem Fall wird durch die Lagesollwerte und die zugeordneten Variablen eine Bahn definiert. Diese Ausgestaltung kann insbesondere bei Handlingaufgaben und bei Kranen Anwendung finden.

Es ist möglich, dass die dem jeweiligen Lagesollwert zugeordneten Variablen eine Geschwindigkeit oder eine Beschleunigung umfassen. In diesem Fall wird nicht nur eine abzufahrende Bahn spezifiziert, sondern zusätzlich auch eine Geschwindigkeit oder Beschleunigung, mit welcher die Bahn abgefahren werden soll. Die Geschwindigkeit oder die Beschleunigung kann nach Bedarf auf die - in diesem Fall lagegeregelte - Achse, auf eine der weiteren lagegeregelten Achsen oder auf einen Bahnparameter bezogen sein.

Es ist möglich, dass die Werte der Achse der Steuereinrichtung fest vorgegeben sind oder von außen - beispielsweise von einem Bediener - vorgegeben werden. Alternativ ist es möglich, dass die Steuereinrichtung die Werte, denen jeweils die Anzahl von Variablen zugeordnet wird, im Rahmen des Lösens des Optimierungsproblems ermittelt. Welche Vorgehensweise ergriffen wird, hängt von dem zu lösenden allgemeinen technologischen Problem ab.

Aufgrund dieser Aufteilung kann ein an sich bekannter, universeller Optimierer verwendet werden. Es ist lediglich erforderlich, das erste spezielle technologische Problem derart zu formulieren, dass entsprechende Parameter des ersten speziellen technologischen Problems als Eingangsgrößen des Optimierer verwendet werden können. Die Ausgangsgrößen des Optimierers, also die ersten Gruppen von optimierten Größen, können dann 1:1 in je eine Anzahl von dem jeweiligen Wert zugeordneten Variablen - gegebenenfalls einschließlich der Ermittlung des jeweiligen Wertes - umgerechnet werden.

Die letztgenannte Ausgestaltung, also die Verwendung des innerhalb der Steuereinrichtung implementierten universellen Optimierers, ist insbesondere dann von Vorteil, wenn die Steuereinrichtung derart ausgebildet ist, dass sie
- zweite Parameter entgegennimmt,
- anhand der zweiten Parameter ein zweites allgemeines technologisches Problem, das verschiedenartig zum ersten allgemeinen technologischen Problem ist, zu einem zweiten speziellen technologischen Problem konkretisiert,
- unter Lösung eines Optimierungsproblems für eine Sequenz von Werten der Achse der Maschine jeweils eine Anzahl von dem jeweiligen Wert zugeordneten Variablen ermittelt, so dass bei Ansteuerung der Maschine durch die Steuereinrichtung das zweite spezielle technologische Problem gemäß einem Optimierungskriterium in optimaler Weise gelöst wird,
- die zugeordneten Variablen unter Zuordnung zum jeweiligen Wert in einem Speicher hinterlegt und
- nach dem Hinterlegen der zugeordneten Variablen einen zweiten Ausführungsbefehl entgegennimmt,
- aufgrund des zweiten Ausführungsbefehls die Sequenz von Werten an die Achse ausgibt,
- beim Ausgeben des jeweiligen Wertes die Maschine entsprechend der Anzahl von dem jeweiligen Wert zugeordneten Variablen ansteuert,
- anhand des zweiten speziellen technologischen Problems eine zweite Parametrierung des Optimierungsproblems ermittelt,
- anhand des mit der zweiten Parametrierung parametrierten Optimierungsproblems innerhalb der Steuereinrichtung mittels des Optimierers zweite Gruppen von optimierten Größen ermittelt und
- anhand je einer zweiten Gruppe von optimierten Größen je eine Anzahl von dem jeweiligen Wert zugeordneten Variablen ermittelt.

Die Vorgabe der zweiten Parameter und/oder des zweiten Ausführungsbefehls kann beispielsweise über die bereits erwähnte Mensch-Maschine-Schnittstelle erfolgen. Alternativ ist es ebenso möglich, dass die zweiten Parameter und/oder der zweite Ausführungsbefehl der Steuereinrichtung aus einem Be- oder Verarbeitungsprozess oder aufgrund sich ändernder Randbedingungen automatisch bestimmt und der Steuereinrichtung zugeführt werden.

Durch diese Ausgestaltung ist es insbesondere möglich, für mehrere verschiedenartige allgemeine technologische Probleme beispielsweise über eine Mensch-Maschine-Schnittstelle jeweils eine Eingabemaske oder dergleichen für die Eingabe der jeweiligen Parameter zur Verfügung zu stellen, anhand des jeweiligen speziellen technologischen Problems die jeweilige Parametrierung des Optimierungsproblems zu ermitteln und die vom Optimierer ermittelten Gruppen von optimierten Größen in die Anzahl von dem jeweiligen Wert zugeordneten Variablen umzurechnen. Es kann aber für alle derartige technologische Probleme ein und derselbe Optimierer verwendet werden.

In einer Ausgestaltung der Steuereinrichtung ist vorgesehen, dass sie das Optimierungskriterium entgegennimmt. Dadurch ist eine Optimierung in verschiedener Hinsicht - je nach Optimierungskriterium - möglich.

Die Aufgabe wird weiterhin durch ein Systemprogramm mit den Merkmalen des Anspruchs 7 gelöst. Erfindungsgemäß wird ein Systemprogramm der eingangs genannten Art dadurch ausgestaltet, dass die Steuereinrichtung durch seine Ausführung erfindungsgemäß ausgebildet wird. Das Systemprogramm kann insbesondere auf einem Datenträger in maschinenlesbarer Form - beispielsweise in elektronischer Form - gespeichert sein.

Die Aufgabe wird weiterhin durch eine Steuereinrichtung mit den Merkmalen des Anspruchs 9 gelöst. Erfindungsgemäß ist die Steuereinrichtung mit einem erfindungsgemäßen Systemprogramm programmiert.

Die Aufgabe wird weiterhin durch eine Maschine mit den Merkmalen des Anspruchs 10 gelöst. Erfindungsgemäß ist die Steuereinrichtung der Maschine erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine mit einer lagegeregelten Achse,
- FIG 2: ein Ablaufdiagramm,
- FIG 3: eine Umsetzung eines ersten technologischen Problems in Lagesollwerten zugeordnete Variable,
- FIG 4: ein Ablaufdiagramm,
- FIG 5: eine weitere Maschine mit einer lagegeregelten Achse,
- FIG 6: eine Umsetzung eines zweiten technologischen Problems in Lagesollwerten zugeordnete Variable und
- FIG 7: ein Ablaufdiagramm.

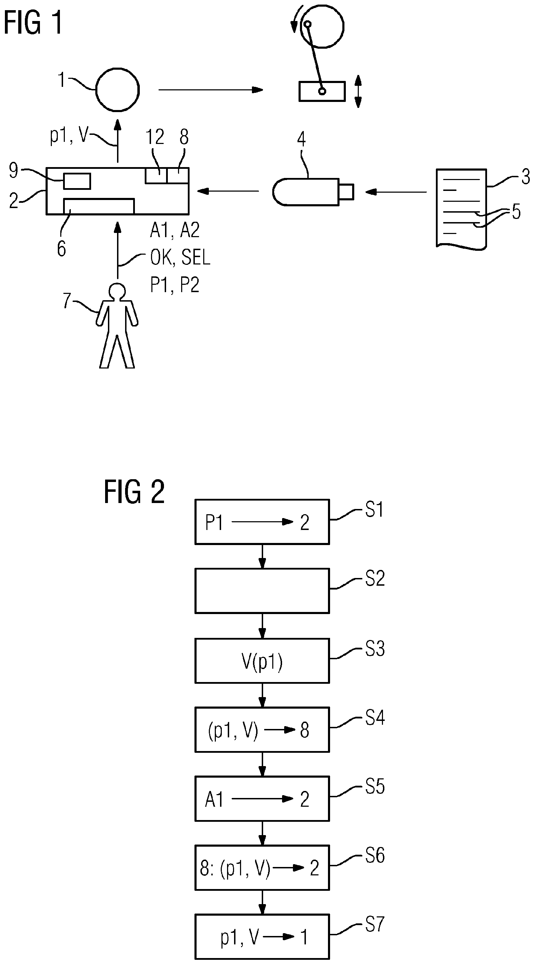

Gemäß FIG 1 weist eine Maschine eine Achse 1 auf. Bei der Ausgestaltung der FIG 1 ist die Achse 1 die einzige Achse. Weiterhin handelt es sich bei der Maschine von FIG 1 um eine Bearbeitungsmaschine. Alternativ könnte es sich um eine Verarbeitungsmaschine handeln. Die Achse 1 ist in dem Ausführungsbeispiel von FIG 1 lagegeregelt. Alternativ könnte die Achse 1 jedoch ebenso geschwindigkeitsgeregelt oder (in Einzelfällen) beschleunigungsgeregelt sein. Auch kann die Maschine als andersartige Maschine ausgebildet sein.

Die Maschine weist weiterhin eine Steuereinrichtung 2 auf. Die Steuereinrichtung 2 ist in der Regel als numerische Steuerung (numerical control) oder als Bewegungssteuerung (motion control) ausgebildet. Die Steuereinrichtung 2 ist mit einem Systemprogramm 3 programmiert. Das Systemprogramm 3 kann beispielsweise auf einem Datenträger 4 in maschinenlesbarer Form (insbesondere in elektronischer Form) gespeichert sein und der Steuereinrichtung 2 durch Verbinden des Datenträgers 4 mit der Steuereinrichtung 2 zugeführt werden. Rein beispielhaft ist der Datenträger 4 in FIG 1 als USB-Memorystick dargestellt. Diese Darstellung ist jedoch rein beispielhaft und nicht beschränkend zu verstehen. Es sind weiterhin auch andere Arten der Programmierung der Steuereinrichtung 2 möglich, beispielsweise über eine Anbindung an ein Datennetz.

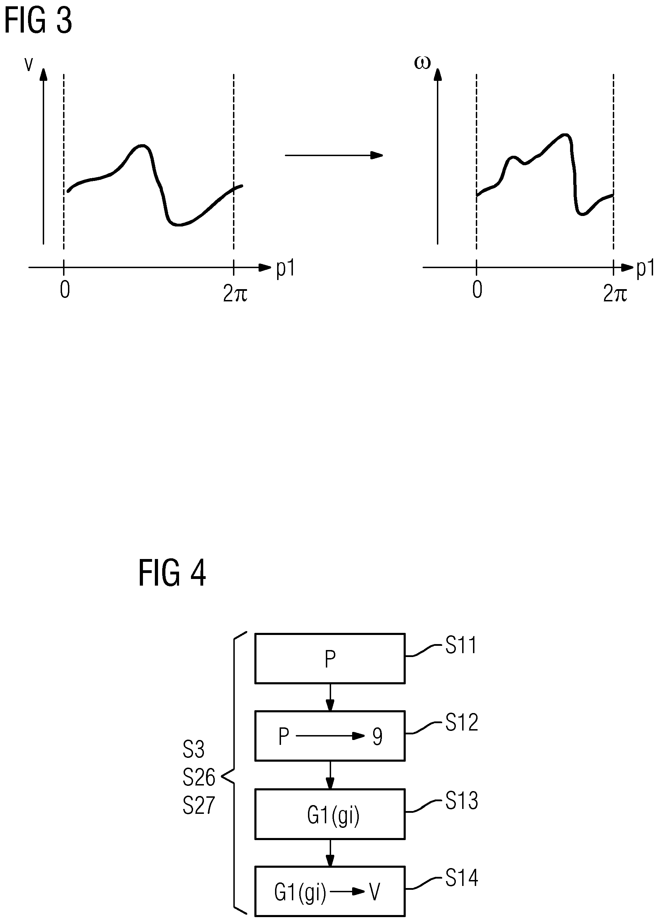

Das Systemprogramm 3 umfasst Maschinencode 5, der von der Steuereinrichtung 2 abarbeitbar ist. Der Maschinencode 5 kann von der Steuereinrichtung 2 direkt und unmittelbar abarbeitbar sein. In diesem Fall besteht der Maschinencode 5 direkt aus Maschinenbefehlen. Alternativ kann es sich bei dem Maschinencode 5 um eine mnemonische Notation handeln, die von der Steuereinrichtung 2 durch Interpretation in Maschinenbefehle umgesetzt wird. Alternativ oder zusätzlich kann eine vorherige Verarbeitung des Maschinencodes 5 erforderlich sein, beispielsweise eine Entschlüsselung. Unabhängig davon, welche Vorgehensweise ergriffen wird, kann die Steuereinrichtung 2 jedoch den Maschinencode 5 ausführen, ohne dass ein Mensch intellektuell tätig werden muss. Die Abarbeitung des Maschinencodes 5 durch die Steuereinrichtung 2 bewirkt, dass die Steuereinrichtung 2 so ausgebildet wird und arbeitet, wie dies nachstehend in Verbindung mit den FIG 2 und 3 näher erläutert wird.

Gemäß FIG 2 nimmt die Steuereinrichtung 2 in einem Schritt S1 - beispielsweise über eine Mensch-Maschine-Schnittstelle 6 (siehe FIG 1) von einem Bediener 7 - erste Parameter P1 entgegen. Mittels der ersten Parameter P1 kann von der Steuereinrichtung 2 in einem Schritt S2 ein erstes allgemeines technologisches Problem zu einem ersten speziellen technologischen Problem konkretisiert werden. Beispielsweise kann gemäß FIG 3 für eine in FIG 1 schematisch angedeutete Servopresse, bei welcher die lagegeregelte Achse 1 über einen Exzenter und eine Pleuelstange auf einen Pressenstempel wirkt, eine Geschwindigkeit des Pressenstempels als Funktion der Hubhöhe des Pressenstempels vorgegeben werden. Das erste konkrete technische Problem ist in diesem - rein beispielhaften - Fall der Verlauf der Geschwindigkeit des Pressenstempels als Funktion der Hubhöhe des Pressenstempels. Als erster Parameter P1 kommen beispielsweise das Ausmaß an Exzentrizität des Exzenters, eine Grenzstellung, bei welcher der Pressenstempel die Presse öffnet und schließt, sowie die Geschwindigkeit des Pressenstempels bei bestimmten Hubhöhen des Pressenstempels infrage. Bei entsprechend anders gelagerten allgemeinen technologischen Problemen würden selbstverständlich andere erste Parameter P1 vorgegeben werden.

In einem Schritt S3 ermittelt die Steuereinrichtung 2 unter Lösung eines Optimierungsproblems für eine Sequenz von Lagesollwerten p1 der lagegeregelten Achse 1 - allgemein: für eine Sequenz von Werten der Lage p1 oder einer zeitlichen Ableitung der Lage p1 der Achse 1 - jeweils eine Anzahl von dem jeweiligen Lagesollwert p1 zugeordneten Variablen V. In dem Beispiel gemäß FIG 1, bei welchem eine einzige Achse 1 vorhanden ist, wird in der Regel für jeden Wert p1 jeweils nur eine einzige Variable V ermittelt. Die Ermittlung der zugeordneten Variablen V erfolgte derart, dass bei Ansteuerung der Maschine durch die Steuereinrichtung 2 das erste spezielle technologische Problem - also beispielsweise der vorgegebene Verlauf der Geschwindigkeit des Pressenstempels als Funktion der Hubhöhe des Pressenstempels - gemäß einem Optimierungskriterium OK in optimaler Weise gelöst wird.

In einem Schritt S4 hinterlegt die Steuereinrichtung 2 die zugeordneten Variablen V unter Zuordnung zum jeweiligen Lagesollwert p1 an einem Speicherort. Beispielsweise kann die Steuereinrichtung 2 die zugeordneten Variablen V in einer ersten Datei 8 abspeichern. Die Speicherung kann remanent sein. In diesem Fall erfolgt die Speicherung derart, dass die gespeicherten Daten p1, V bzw. die erste Datei 8 als Ganzes auch dann erhalten bleiben, wenn eine Energieversorgung der Steuereinrichtung 2 unterbrochen wird, beispielsweise weil die Steuereinrichtung 2 abgeschaltet wird. In jedem Fall aber erfolgt die Hinterlegung derart, dass die hinterlegten Daten p1, V wiederholt abrufbar und ausführbar sind.

Nach dem Hinterlegen der zugeordneten Variablen V nimmt die Steuereinrichtung 2 in einem Schritt S5 - beispielsweise vom Bediener 7 - einen ersten Ausführungsbefehl A1 entgegen. Eine Zeitspanne, die zwischen dem Hinterlegen der zugeordneten Variablen V und dem Entgegennehmen des ersten Ausführungsbefehls A1 liegt, kann nach Bedarf sein. Sie kann bei wenigen Sekunden liegen. Sie kann auch bei Stunden, Tagen oder Wochen und sogar darüber liegen. Entscheidend ist lediglich, dass die Steuereinrichtung 2 zunächst die Variablen V vollständig ermittelt und vollständig abspeichert und erst danach den ersten Ausführungsbefehl A1 entgegennimmt.

Aufgrund des ersten Ausführungsbefehls A1 liest die Steuereinrichtung 2 in einem Schritt S6 die hinterlegten zugeordneten Variablen V aus. Weiterhin gibt die Steuereinrichtung 2 in einem Schritt S7 die Sequenz von Werten p1 - im vorliegenden Fall von Lagesollwerten p1 - an die Achse 1 aus. Auch steuert die Steuereinrichtung 2 im Rahmen des Schrittes S7 beim Ausgeben des jeweiligen Wertes p1 die Maschine entsprechend der dem jeweiligen Wert p1 zugeordneten Variablen V an. Je nach Vorgabe durch den Bediener 7 ist es beispielsweise möglich, dass die Ausgabe der Sequenz von Werten p1 und der zugeordneten Variablen V
- nur einmal erfolgt,
- erfolgt, bis eine vorbestimmte Anzahl von Iterationen abgearbeitet ist, oder
- erfolgt, bis der Bediener 7 oder eine andere Einrichtung einen Abbruchbefehl vorgibt.

Unabhängig davon, ob nur eine einmalige Ausgabe erfolgt oder ob eine mehrmalige Ausgabe erfolgt, bleiben die an dem Speicherort hinterlegten Daten p1, V erhalten. Sie stehen also auch für spätere Abrufe zur Verfügung.

Bei dem obenstehend in Verbindung mit den FIG 1 bis 3 erläuterten Ausführungsbeispiel ist die Anzahl an dem jeweiligen Wert p1 zugeordneten Variablen V gleich 1. Weiterhin ist die dem jeweiligen Wert p1 zugeordnete Variable V eine Ableitung des Wertes p1 nach dem Ort oder der Zeit, gemäß FIG 3 konkret nach der Zeit. Gemäß FIG 3 ist es die (Winkel-)Geschwindigkeit ω. Es könnte jedoch - je nach technologischem Problem - auch eine andere Variable zugeordnet werden. Nachfolgend werden - rein beispielhaft - einige derartige technologische Probleme kurz erläutert.

Bei einem Spritzgießprozess - bei dem das Einspritzen des plastifizierten Materials in die Spritzgießform diskontinuierlich erfolgt - kann die Achse 1 beispielsweise einen Kolbenhub bewirken. In diesem Fall kann die Achse 1 durch die Werte p1 lagegeregelt sein. Als zugeordnete Variable V kommen beispielsweise eine Temperatur, eine Heizleistung, eine Einspritzgeschwindigkeit und/oder ein Einspritzdruck infrage.

Beim Strangpressen - bei dem das Auspressen kontinuierlich erfolgt - kann die Achse 1 beispielsweise einen Vorschub an Material bewirken. In diesem Fall kann die Achse 1 geschwindigkeitsgeregelt bzw. drehzahlgeregelt sein. Die Werte p1 sind in diesem Fall die erste zeitliche Ableitung der Lage der Achse 1. Als zugeordnete Variable V kommen - analog zum Spritzgießen - beispielsweise eine Temperatur, eine Heizleistung und/oder ein Einspritzdruck infrage.

Bei schwingungsfähigen Systemen werden oftmals Tilger verwendet. In diesem Fall kann die Achse 1 beschleunigungsgeregelt sein. Als zugeordnete Variable V kommt beispielsweise eine aufzubringende Kraft infrage.

Es ist möglich, dass die Werte p1 vorab bestimmt sind oder der Steuereinrichtung 2 anderweitig bekannt sind. In diesem Fall ist es zwar möglich, aber nicht erforderlich, zusätzlich zu den zugeordneten Variablen V auch die Werte p1 selbst zu hinterlegen. Die Zuordnung der Variablen V zu den Werten p1 ergibt sich in diesem Fall direkt aus der Reihenfolge der zugeordneten Variablen V. Alternativ ist es möglich, dass die Werte p1 der Steuereinrichtung 2 von außen - beispielsweise vom Bediener 7 - vorgegeben werden. In diesem Fall müssen die Werte p1 von der Steuereinrichtung 2 zwar nicht ermittelt werden, sie müssen jedoch zusammen mit den zugeordneten Variablen V abgespeichert werden. Wiederum alternativ ist es möglich, dass die Steuereinrichtung 2 die Werte p1, denen sie jeweils die zugeordneten Variablen V zuordnet, im Rahmen des Lösen des Optimierungsproblems mit ermittelt.

Zum Lösen des Optimierungsproblems ermittelt die Steuereinrichtung 2 gemäß FIG 4 vorzugsweise zunächst in einem Schritt S11 anhand des ersten speziellen technologischen Problems eine erste Parametrierung P des Optimierungsproblems. Die erste Parametrierung kann beispielsweise in Bezug auf ein vordefiniertes Gleichungssystem mit Differenzialgleichungen und/oder algebraischen Gleichungen mit oder ohne einzuhaltende Gleichheits- und/oder Ungleichheitsbedingungen die Festlegung von Rand- und Anfangsbedingungen umfassen. Es sind jedoch auch andere Ausgestaltungen möglich.

Die erste Parametrierung gibt die Steuereinrichtung 2 in einem Schritt S12 einem Optimierer 9 vor, der gemäß FIG 1 innerhalb der Steuereinrichtung 2 implementiert ist. Geeignete Optimierer 9 sind Fachleuten als solche bekannt. Sodann startet die Steuereinrichtung 2 den Optimierer 9. Anhand des mit der ersten Parametrierung parametrierten Optimierungsproblems ermittelt die Steuereinrichtung 2 mittels des Optimierers 9 in einem Schritt S13 erste Gruppen G1 von optimierten Größen gi. Anhand je einer ersten Gruppe G1 von optimierten Größen gi ermittelt die Steuereinrichtung 2 sodann in einem Schritt S14 je eine (1) Anzahl von dem jeweiligen Wert p1 zugeordneten Variablen V.

Im Rahmen der Ermittlung der optimierten Größen gi berücksichtigt die Steuereinrichtung 2 das Optimierungskriterium OK. Es ist möglich, dass das Optimierungskriterium OK der Steuereinrichtung 2 fest vorgegeben ist. Vorzugsweise kann das Optimierungskriterium OK der Steuereinrichtung 2 jedoch gemäß FIG 1 vorgegeben werden.

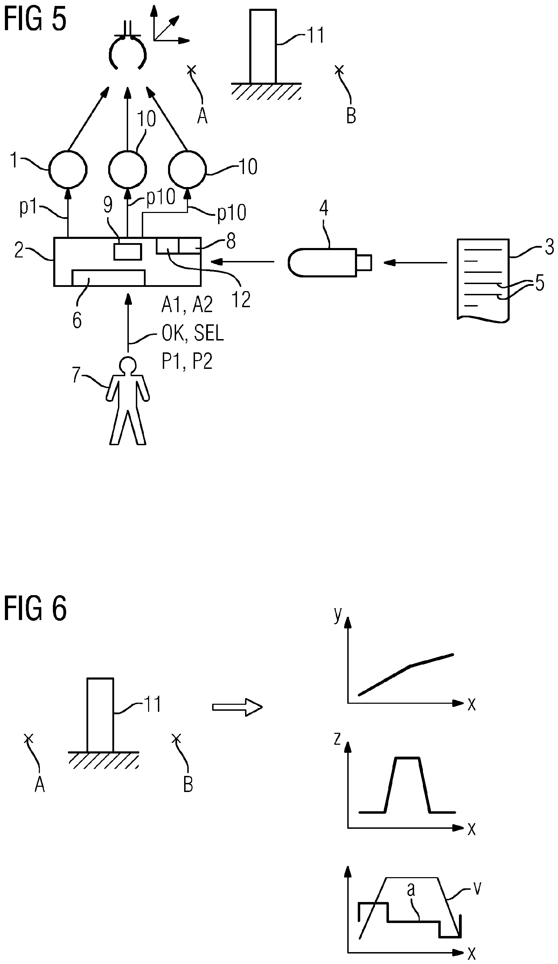

Die Ausgestaltung der Maschine gemäß FIG 5 korrespondiert über weite Strecken mit der von FIG 1. Die obenstehend in Verbindung mit den FIG 1 bis 4 beschriebenen Vorgehensweisen sind daher auch für die Ausgestaltung der Maschine gemäß FIG 5 gültig, sofern nachstehend nichts anderes ausgesagt ist.

Bei der Ausgestaltung der Maschine gemäß FIG 5 ist zusätzlich zu der Achse 1 mindestens eine weitere Achse 10 vorhanden, beispielsweise zwei oder drei weitere Achsen 10. Meist sind die Achsen 1, 10 lagegeregelt. Analog zur Ausgestaltung von FIG 1 handelt sich bei der Maschine von FIG 5 um eine Bearbeitungsmaschine. Alternativ könnte es sich um eine Verarbeitungsmaschine, eine Werkzeugmaschine oder einen Industrieroboter handeln. Das erste konkrete technische Problem kann in diesem - ebenfalls rein beispielhaften - Fall gemäß FIG 5 die Ermittlung eines abzufahrenden Weges bei vorgegebener Anfangsposition A und vorgegebener Endposition B sein, wobei im Rahmen der Ermittlung des Weges Randbedingungen wie beispielsweise ein Hindernis 11 berücksichtigt werden sollen und eine zeit- oder energieoptimale Fahrweise ermittelt werden soll. FIG 6 zeigt - rein beispielhaft - eine denkbare Lösung des Optimierungsproblems für insgesamt drei translatorisch wirkende Achsen 1, 10, wobei die Achse 1 auf die x-Koordinate wirkt, die Achsen 10 auf die y- und z-Koordinate.

Falls mittels der Steuereinrichtung 2 - wie gemäß FIG 5 der Fall - mehrere Achsen 1, 10 angesteuert werden sollen, umfassen die dem jeweiligen Wert p1 - also den Werten p1 für die Achse 1 - zugeordneten Variablen V für jede weitere Achse 10 deren jeweiligen Wert p10. Zusätzlich können - nicht aber müssen - die dem jeweiligen Wert p1 zugeordneten Variablen V entsprechend der Darstellung in FIG 6 eine Geschwindigkeit v oder eine Beschleunigung a umfassen. Die Geschwindigkeit v oder die Beschleunigung a können nach Bedarf auf die Achse 1, auf eine der weiteren Achsen 10 oder auf einen anderen Parameter bezogen sein, beispielsweise auf eine resultierende Bahn.

Obenstehend wurde anhand von zwei Beispielen erläutert, wie mittels der vorliegenden Erfindung durch Lösen eines Optimierungsproblems die zugeordneten Variablen V ermittelt werden können. Die vorliegende Erfindung ist jedoch nicht auf diese beiden technologischen Probleme beschränkt, sondern ohne weiteres auch bei anderen technologischen Problemen anwendbar.

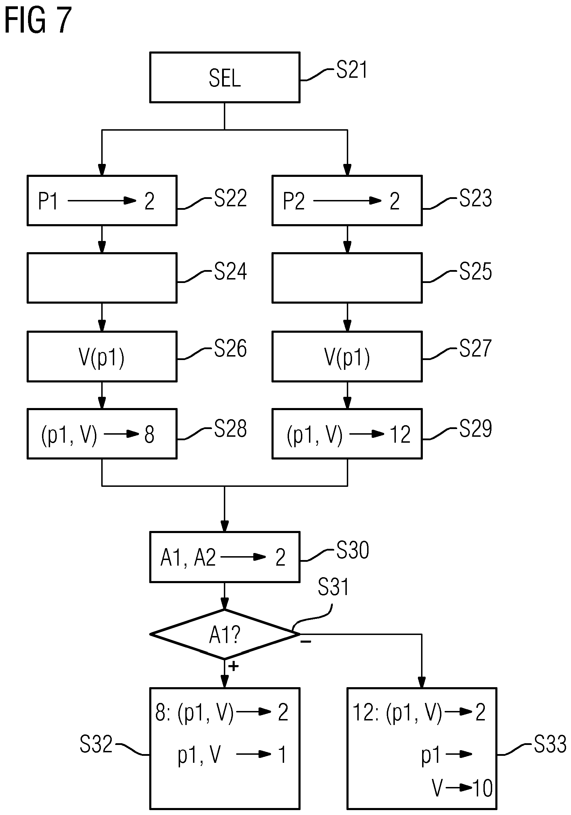

Es ist weiterhin möglich, die Steuereinrichtung 2 aufgrund ihrer Programmierung mit dem Systemprogramm 3 derart auszugestalten, dass durch die Steuereinrichtung 2 nicht nur ein einziges, sondern mehrere allgemeine technologische Probleme optimiert werden können, wobei die technologischen Probleme verschiedenartig zueinander sind. Beispielsweise kann es aufgrund der Programmierung der Steuereinrichtung 2 mit dem Systemprogramm 3 möglich sein, dass der Steuereinrichtung 2 gemäß FIG 7 zunächst mittels eines Auswahlbefehls SEL vorgegeben wird, welches von mindestens zwei allgemeinen technologischen Problemen die Steuereinrichtung 2 in konkretisierter Form lösen soll. In diesem Fall nimmt die Steuereinrichtung 2 nach der Entgegennahme des Auswahlbefehls SEL (FIG 7, Schritt S21) je nach Wert des Auswahlbefehls SEL beispielsweise die ersten Parameter P1 für ein erstes allgemeines technologisches Problem (Schritt S22) oder zweite Parameter P2 für ein zweites allgemeines technologisches Problem (Schritt S23) entgegen. Das erste technologische Problem kann beispielsweise das obenstehend in Verbindung mit den FIG 1 bis 3 erläuterte technologische Problem sein, das zweite technologische Problem das obenstehend in Verbindung mit den FIG 5 und 6 erläuterte technologische Problem. Es sind jedoch auch andere technologische Probleme möglich. Beispiele derartiger anderer technologischer Probleme wurden bereits in Verbindung mit FIG 1 erwähnt.

Die prinzipielle Vorgehensweise zur optimierten Lösung ist in beiden Fällen die gleiche. Insbesondere - siehe in FIG 7 die beiden Schritte S24 und S25 - konkretisiert die Steuereinrichtung 2 anhand der jeweils vorgegebenen Parameter P1, P2 das jeweilige allgemeine technologische Problem zu einem jeweiligen speziellen technologischen Problem. Weiterhin ermittelt die Steuereinrichtung 2 - siehe in FIG 7 die beiden Schritte S26 und S27 - jeweils für eine Sequenz von Werten p1 der Achse 1 der - gegebenenfalls jeweiligen - Maschine jeweils eine Anzahl von dem jeweiligen Wert p1 zugeordneten Variablen V. Die Ermittlung erfolgt in beiden Fällen unter Lösung eines Optimierungsproblems derart, dass bei Ansteuerung der - gegebenenfalls jeweiligen - Maschine durch die Steuereinrichtung 2 das jeweilige spezielle technologische Problem gemäß dem Optimierungskriterium OK in optimaler Weise gelöst wird. Weiterhin werden - siehe in FIG 7 die beiden Schritte S28 und S29 - die jeweils ermittelten zugeordneten Variablen V unter Zuordnung zum jeweiligen Wert p1 abgespeichert (hinterlegt). Die Hinterlegung kann beispielsweise entsprechend der Darstellung in FIG 1 in einer jeweiligen Datei 8, 12 erfolgen.

Nach dem Abspeichern nimmt die Steuereinrichtung 2 in einem Schritt S30 einen Ausführungsbefehl A1, A2 entgegen. In einem Schritt S31 prüft die Steuereinrichtung 2, um welchen Ausführungsbefehl A1, A2 es sich gehandelt hat. Je nach Ergebnis der Prüfung des Schrittes S31 geht die Steuereinrichtung 2 zu einem Schritt S32 oder einem Schritt S33 über. Falls der erste Ausführungsbefehl A1 vorgegeben wurde, liest die Steuereinrichtung 2 im Schritt S32 die bezüglich des ersten technologischen Problems ermittelten und hinterlegten zugeordneten Variablen V aus, gibt die Sequenz von Werten p1 an die Achse 1 aus und steuert beim Ausgeben des jeweiligen Wertes p1 die Maschine entsprechend der Anzahl von dem jeweiligen Wert p1 zugeordneten Variablen V an. Falls der zweite Ausführungsbefehl A2 vorgegeben wurde, liest die Steuereinrichtung 2 im Schritt S33 die bezüglich des zweiten technologischen Problems ermittelten und hinterlegten zugeordneten Variablen V aus, gibt die Sequenz von Werten p1 an die Achse 1 aus und steuert beim Ausgeben des jeweiligen Wertes p1 die Maschine entsprechend der Anzahl von dem jeweiligen Wert p1 zugeordneten Variablen V an.

Einen erheblichen Vorteil stellt es in diesem Zusammenhang dar, wenn im Rahmen der beiden Schritte S26 und S27 die prinzipiell gleiche Vorgehensweise ergriffen wird, nämlich dass die Steuereinrichtung 2 - siehe FIG 4 -
- anhand des jeweiligen speziellen technologischen Problems eine jeweilige Parametrierung des Optimierungsproblems ermittelt,
- anhand des mit der jeweiligen Parametrierung parametrierten Optimierungsproblems innerhalb der Steuereinrichtung 2 mittels des Optimierers 9 jeweilige Gruppen G1, G2 von optimierten Größen gi ermittelt und
- anhand je einer jeweiligen Gruppe G1, G2 von optimierten Größen gi je eine Anzahl von dem jeweiligen Wert p1 zugeordneten Variablen V ermittelt.

Insbesondere der Schritt S13 ist damit in jedem Fall - also unabhängig davon, welches spezielle technologische Problem optimiert werden soll - identisch derselbe. Es kann also ein und derselbe Optimierer 9 für die Lösung verschiedenartiger technologischer Probleme verwendet werden.

Die obenstehend für zwei verschiedenartige technologische Probleme erläuterte Vorgehensweise ist ohne weiteres auf drei, vier, fünf ... verschiedenartige technologische Probleme erweiterbar.

Die vorliegende Erfindung weist viele Vorteile auf. Dies gilt bereits für die Ermittlung der zugeordneten Variablen V und deren Hinterlegung als solche. In noch stärkerem Ausmaß gilt dies für die Verwendung eines universellen Optimierers 9. Denn dadurch ist es möglich, mit ein und demselben Optimierer 9 für eine Mehrzahl von technologischen Problemen jeweils eine optimale Lösung zu ermitteln. Es ist lediglich erforderlich, anhand des jeweiligen konkreten technologischen Problems die zugehörige Parametrierung des Optimierers 9 vorzunehmen und dessen Lösung sodann in die Ermittlung der zugeordneten Variablen V und eventuell auch der Werte p1 umzusetzen. Durch diese Vorgehensweise kann insbesondere vom Hersteller der Steuereinrichtung 2 der Optimierer 9 gekapselt werden und lediglich eine Schnittstelle zur Verfügung gestellt werden, über die der Optimierer 9 eine konkrete Parametrierung entgegennehmen und optimierte Größen gi zurückliefern kann.

Zusammengefasst betrifft die vorliegende Erfindung somit folgenden Sachverhalt:
Eine Steuereinrichtung 2 für eine Maschine mit mindestens einer Achse 1 nimmt erste Parameter P1 entgegen. Anhand der ersten Parameter P1 konkretisiert die Steuereinrichtung 2 ein erstes allgemeines technologisches Problem zu einem ersten speziellen technologischen Problem. Unter Lösung eines Optimierungsproblems ermittelt die Steuereinrichtung 2 für eine Sequenz von Werten p1 einer Lage oder einer zeitlichen Ableitung der Lage der Achse 1 der Maschine einmalig vorab jeweils eine Anzahl von dem jeweiligen Wert p1 zugeordneten Variablen V, so dass bei Ansteuerung der Bearbeitungsmaschine durch die Steuereinrichtung 2 das erste spezielle technologische Problem gemäß einem Optimierungskriterium OK in optimaler Weise gelöst wird. Die zugeordneten Variablen V werden von der Steuereinrichtung 2 unter Zuordnung zum jeweiligen Wert p1 in einem Speicher hinterlegt. Die Steuereinrichtung 2 nimmt nach dem Hinterlegen der zugeordneten Variablen V einen ersten Ausführungsbefehl A1 entgegen. Sie gibt aufgrund des ersten Ausführungsbefehls A1 die Sequenz von Werten p1 an die Achse 1 aus. Beim Ausgeben des jeweiligen Wertes p1 steuert die Steuereinrichtung 2 die Maschine entsprechend der Anzahl von dem jeweiligen Wert p1 zugeordneten Variablen V an.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuereinrichtung für eine Maschine mit mindestens einer Achse (1), wobei die Steuereinrichtung mit einem Systemprogramm (3) programmiert ist, wobei die Steuereinrichtung derart ausgebildet ist, dass sie
- in einem ersten Schritt (S1) über eine Mensch-Maschinen Schnittstelle erste Parameter (P1) entgegennimmt,
- in einem zweiten Schritt (S2) anhand der ersten Parameter (P1) ein erstes allgemeines technologisches Problem zu einem ersten speziellen technologischen Problem konkretisiert,
- in einem dritten Schritt (S3) anhand des ersten speziellen technologischen Problems eine erste Parametrierung eines Optimierungsproblems ermittelt,
- anhand des mit der ersten Parametrierung parametrierten Optimierungsproblems innerhalb der Steuereinrichtung (2) mittels eines Optimierers (9) für eine Sequenz von Werten (p1) einer Lage oder einer zeitlichen Ableitung der Lage der Achse (1) der Maschine erste Gruppen (G1) von optimierten Größen (gi) ermittelt und anhand je einer ersten Gruppe (G1) von optimierten Größen (gi) jeweils eine Anzahl von dem jeweiligen Wert (p1) zugeordneten Variablen (V) einmalig vorab ermittelt, so dass bei Ansteuerung der Maschine durch die Steuereinrichtung das erste spezielle technologische Problem gemäß einem Optimierungskriterium (OK) in optimaler Weise gelöst wird, wobei die Werte (p1) Lagesollwerte der Achse (1) sind und die dem jeweiligen Lagesollwert (p1) zugeordneten Variablen (V) einen jeweiligen Lagesollwert (p10) einer weiteren lagegeregelten Achse (10) umfassen,
- in einem vierten Schritt (S4)die zugeordneten Variablen (V) unter Zuordnung zum jeweiligen Wert (p1) in einer Datei speichert,
- in einem fünften Schritt (S5) nach dem Hinterlegen der zugeordneten Variablen (V) von einem Bediener (7) einen ersten Ausführungsbefehl (A1) entgegennimmt,
- in einem Schritt (S6) die Steuereinrichtung aufgrund des ersten Ausführungsbefehls (A1) die hinterlegten zugordneten Variablen V ausliest,
- in einem Schritt (S7) die Steuereinrichtung aufgrund des ersten Ausführungsbefehls (A1) die Sequenz von Werten (p1) an die Achse (1) ausgibt und die Steuereinrichtung beim Ausgeben des jeweiligen Wertes (p1) die Maschine entsprechend der Anzahl von dem jeweiligen Wert (p1) zugeordneten Variablen (V) ansteuert,
wobei je nach Vorgabe des Bedieners (7) die Ausgabe der Sequenz von Werten (p1) und der zugeordneten Variablen (V)
- nur einmal erfolgt,
- erfolgt, bis eine vorbestimmte Anzahl von Iterationen abgearbeitet ist, oder
- erfolgt, bis der Bediener (7) oder eine andere Einrichtung einen Abbruchbefehl vorgibt.

2. Steuereinrichtung nach Anspruch 1,
**dadurch gekennzeichnet,**
**dass** die Anzahl an dem jeweiligen Wert (p1) zugeordneten Variablen (V) gleich 1 ist und dass die dem jeweiligen Wert (p1) zugeordnete Variable (V) eine Ableitung des Wertes (p1) nach dem Ort oder der Zeit ist.

3. Steuereinrichtung nach einem der obigen Ansprüche,
**dadurch gekennzeichnet,**
**dass** die dem jeweiligen Lagesollwert (p1) zugeordneten Variablen (V) eine Geschwindigkeit (v) oder eine Beschleunigung (a) umfassen.

4. Steuereinrichtung nach einem der obigen Ansprüche,
**dadurch gekennzeichnet,**
**dass** sie die Werte (p1), denen jeweils die Anzahl von Variablen (V) zugeordnet wird, im Rahmen des Lösen des Optimierungsproblems ermittelt.

5. Steuereinrichtung nach einem der obigen Ansprüche,
**dadurch gekennzeichnet,**
**dass** sie derart ausgebildet ist, dass sie
- zweite Parameter (P2) entgegennimmt,
- anhand der zweiten Parameter (P2) ein zweites allgemeines technologisches Problem, das verschiedenartig zum ersten allgemeinen technologischen Problem ist, zu einem zweiten speziellen technologischen Problem konkretisiert,
- unter Lösung eines Optimierungsproblems für eine Sequenz von Werten (p1) der Achse (1) der Maschine jeweils eine Anzahl von dem jeweiligen Wert (p1) zugeordneten Variablen (V) ermittelt, so dass bei Ansteuerung der Maschine durch die Steuereinrichtung das zweite spezielle technologische Problem gemäß einem Optimierungskriterium (OK) in optimaler Weise gelöst wird,
- die zugeordneten Variablen (V) unter Zuordnung zum jeweiligen Wert (p1) in einem Speicher hinterlegt,
- nach dem Hinterlegen der zugeordneten Variablen (V) einen zweiten Ausführungsbefehl (A2) entgegennimmt,
- aufgrund des zweiten Ausführungsbefehls (A2) die Sequenz von Werten (p2) an die Achse (1) ausgibt,
- beim Ausgeben des jeweiligen Wertes (p1) die Maschine entsprechend der Anzahl von dem jeweiligen Wert (p1) zugeordneten Variablen (V) ansteuert,
- anhand des zweiten speziellen technologischen Problems eine zweite Parametrierung des Optimierungsproblems ermittelt,
- anhand des mit der zweiten Parametrierung parametrierten Optimierungsproblems innerhalb der Steuereinrichtung mittels des Optimierers (9) zweite Gruppen (G2) von optimierten Größen (gi) ermittelt und
- anhand je einer zweiten Gruppe (G2) von optimierten Größen (gi) je eine Anzahl von dem jeweiligen Wert (p1) zugeordneten Variablen (V) ermittelt.

6. Steuereinrichtung nach einem der obigen Ansprüche,
**dadurch gekennzeichnet,**
**dass** sie das Optimierungskriterium (OK) von einem Bediener entgegennimmt.

7. Systemprogramm, das Maschinencode (5) umfasst, der von einer Steuereinrichtung (2) für eine Maschine mit mindestens einer Achse (1) abarbeitbar ist, wobei die Abarbeitung des Maschinencodes (5) durch die Steuereinrichtung (2) bewirkt, dass die Steuereinrichtung (2) nach einem der obigen Ansprüche ausgebildet wird.

8. Systemprogramm nach Anspruch 7,
**dadurch gekennzeichnet,**
**dass** es auf einem Datenträger (4) in maschinenlesbarer Form gespeichert ist.

9. Steuereinrichtung für eine Maschine mit mindestens einer Achse (1), wobei die Steuereinrichtung mit einem Systemprogramm (3) nach Anspruch 7 programmiert ist.

10. Maschine mit mindestens einer Achse (1) und einer Steuereinrichtung (2), wobei die Steuereinrichtung (2) gemäß Anspruch 9 ausgebildet ist.

## Claims

1. Control device for a machine with at least one axis (1), wherein the control device is programmed with a system program (3), wherein the control device is embodied such that
- in a first step (S1) it accepts first parameters (P1) by way of a human/machine interface,
- in a second step (S2) on the basis of the first parameters (P1) it renders a first general technological problem in concrete terms as a specific technological problem,
- in a third step (S3) on the basis of the first specific technological problem, it determines a first parameterization of an optimization problem,
- on the basis of the optimization problem parameterized with the first parameterization, it determines within the control device (2) by means of an optimizer (9) for a sequence of values (p1) of a location or a temporal derivation of the location of the axis (1) of the machine, first groups (G1) of optimized quantities (gi) and, on the basis of a first group (G1) of optimized quantities (gi) in each case, it determines a number of variables (V) assigned to the respective value (p1) once in advance, so that when the machine is activated by the control device, the first specific technological problem is solved in an optimum manner in accordance with an optimization criterion (OK), wherein the values (p1) are required position values of the axis (1) and the variables (V) assigned to the respective required position values (p1) comprise a respective required position value (p10) of a further position-regulated axis (10),
- in a fourth step (S4), it stores the assigned variables (V) in a file while assigning them to the respective value (p1),
- in a fifth step (S5), after the storage of the assigned variables (V), it accepts a first execution command (A1) from an operator (7),
- in a step (S6), on the basis of the first execution command (A1), the control device reads out the stored, assigned variables V,
- in a step (S7), on the basis of the first execution command (A1), the control device outputs the sequence of values (p1) to the axis (1) and when outputting the respective value (p1), the control device activates the machine in accordance with the number of variables (V) assigned to the respective value (p1),
wherein depending on the specifications of the operator (7), the output of the sequence of values (p1) and the assigned variables (V)
- only takes place one,
- takes place until a predetermined number of iterations is executed or
- takes place until the operator (7) or another device prespecifies an abort command.

2. Control device according to claim 1,
**characterised in that**
the number of variables (V) assigned to the respective value (p1) is equal to 1 and the variable (V) assigned to the respective value (p1) is a derivation of the value (p1) according to the location or the time.

3. Control device according to one of the above claims, **characterised in that**
the variables (V) assigned to the respective required position value (p1) comprise a velocity (v) or an acceleration (a).

4. Control device according to one of the above claims, **characterised in that**
it determines the values (p1) to which the number of variables (V) will be assigned in each case as part of solving the optimization problem.

5. Control device according to one of the above claims, **characterised in that**
it is embodied such that
- it accepts second parameters (P2),
- on the basis of the second parameters (P2), it renders a second general technological problem which is of a different type to the first general technological problem in concrete terms as a second specific technological problem,
- while solving an optimization problem for a sequence of values (p1) of the axis (1) of the machine, it determines in each case a number of variables (V) assigned to the respective value (p1), so during activation of the machine by the control device, the second specific technological problem will be solved in the optimum way in accordance with an optimization criterion (OK),
- it stores the assigned variables (V) in a memory while assigning them to the respective value (p1),
- after the storage of the assigned variables (V), it accepts a second execution command (A2),
- on the basis of the second execution command (A2), it outputs the sequence of values (p2) to the axis (1),
- during output of the respective value (p1), it activates the machine in accordance with the number of variables (V) assigned to the respective value (p1),
- on the basis of the second specific technological problem, it determines a second parameterization of the optimization problem,
- on the basis of the optimization problem parameterized with the second parameterization, it determines within the control device by means of the optimizer (9) second groups (G2) of optimized quantities (gi) and
- on the basis of a second group (G2) of optimized quantities (gi) in each case, it determines a number of variables (V) assigned to the respective value (p1).

6. Control device according to one of the above claims, **characterised in that**
it accepts the optimization criterion (OK) from an operator.

7. System program comprising machine code (5) which is able to be executed by a control device (2) for a machine with at least one axis (1), wherein the execution of the machine code (5) by the control device (2) causes the control device (2) to be embodied in accordance with one of the above claims.

8. System program according to claim 7,
**characterised in that**
it is stored on a data medium (4) in machine-readable form.

9. Control device for a machine with at least one axis (1), wherein the control device is programmed with a system program (3) according to claim 7.

10. Machine with at least one axis (1) and a control device (2), wherein the control device (2) is embodied in accordance with claim 9.

## Revendications

1. Dispositif de commande d'une machine ayant au moins un axe (1), le dispositif de commande étant programmé par un programme (3) de système, le dispositif de commande étant constitué de manière,
- dans un premier stade (S1), à recevoir des premiers paramètres (P1) par une interface homme-machine,
- dans un deuxième stade (S2), à concrétiser, à l'aide des premiers paramètres (P1), un premier problème technologique général en un premier problème technologique spécial,
- dans un troisième stade (S3), à déterminer, à l'aide du premier problème technologique spécial, un premier paramétrage d'un problème d'optimisation,
- à l'aide du problème d'optimisation paramétré par le premier paramétrage, à déterminer, au sein du dispositif (2) de commande, au moyen d'un optimiseur (9) d'une séquence de valeurs (p1) d'une position ou d'une dérivée, en fonction du temps, de la position de l'axe (1) de la machine, des premiers groupes (G1) de grandeurs (gi) optimisées et, à l'aide de, respectivement, un premier groupe (G1) de grandeurs (gi) optimisées, à déterminer à l'avance une fois, respectivement, un nombre de variables (V) associées à la valeur (p1) respective, de manière à résoudre de manière optimum, lorsque la machine est commandée par le dispositif de commande, le premier problème technologique spécial suivant un critère (OK) d'optimisation, les valeurs (p1) étant des valeurs de consigne de position de l'axe (1) et les variables (V) associées à la valeur (p1) de consigne de position respective comprenant une valeur (p10) de consigne de position respective d'un autre axe (10) réglé en position,
- dans un quatrième stade (S4), à mettre en mémoire dans un fichier les variables (V) associées avec association à la valeur (p1) respective,
- dans un cinquième stade (S5), après la mise en mémoire des variables (V) associées, à recevoir d'un opérateur (7) une première instruction (A1) d'exécution,
- dans un stade (S6), le dispositif de commande lit, sur la base de la première instruction (A1) d'exécution, les variables (V) associées mises en mémoire,
- dans un stade (S7), le dispositif de commande donne à l'axe (1), sur la base de la première instruction (A1) d'exécution, la séquence de valeurs (p1) et le dispositif de commande, lorsqu'il émet la valeur (p1) respective, commande la machine conformément au nombre de variables (V) associées à la valeur (p1) respective,
dans lequel, suivant la prescription de l'opérateur (7), l'émission de la séquence de valeurs (p1) et des variables (V)
- s'effectue seulement une fois,
- s'effectue jusqu'à ce qu'un nombre défini à l'avance d'itérations soit effectué, ou
- s'effectue jusqu'à ce que l'opérateur (7) ou un autre dispositif donne une instruction d'arrêt.

2. Dispositif de commande suivant la revendication 1, **caractérisé**
**en ce que** le nombre de variables (V) associées à la valeur (p1) respective est égal à 1 et **en ce que** la variable (V) associée à la valeur (p1) respective est une dérivée de la valeur (p1) en fonction de l'espace ou du temps.

3. Dispositif de commande suivant l'une des revendications précédentes,
**caractérisé**
**en ce que** les variables (V) associées à la valeur (p1) de consigne de position respective comprennent une vitesse (v) ou une accélération (a).

4. Dispositif de commande suivant l'une des revendications précédentes,
**caractérisé**
**en ce qu'**il détermine les valeurs (p1), auxquelles est associé, respectivement, le nombre de variables (V), dans le cadre de la résolution du problème d'optimisation.

5. Dispositif de commande suivant l'une des revendications précédentes,
**caractérisé**
**en ce qu'**il est constitué de manière
- à recevoir des deuxièmes paramètres (P2),
- à l'aide des deuxièmes paramètres (P2), à concrétiser un deuxième problème technologique général, qui est un problème d'un type différent du premier problème technologique général, en un deuxième problème technologique spécial,
- en résolvant un problème d'optimisation pour une séquence de valeurs (p1) de l'axe (1) de la machine, à déterminer, respectivement, un nombre de variables (V) associées à la valeur (p1) respective, de manière à résoudre de façon optimum, lorsque la machine est commandée par le dispositif de commande, le deuxième problème technologique spécial suivant un critère (OK) d'optimisation,
- à mettre dans une mémoire les variables (V) associées avec association à la valeur (p1) respective,
- après la mise en mémoire des variables (V) associées, à recevoir une deuxième instruction (A2) d'exécution,
- à, sur la base de la deuxième instruction (A2) d'exécution, donner la séquence de valeurs (p2) à l'axe (1),
- lors de l'émission de la valeur (P1) respective, à commander la machine conformément au nombre de variables (V) associées à la valeur (p1) respective,
- à déterminer, au moyen du deuxième problème technologique spécial, un deuxième paramétrage du problème d'optimisation,
- à déterminer, à l'aide du problème d'optimisation, paramétré par le deuxième paramétrage, au sein du dispositif de commande, au moyen de l'optimiseur (9), des deuxièmes groupes (G2) de grandeurs (gi) optimisées et
- à déterminer, à l'aide de, respectivement, un deuxième groupe (G2) de grandeurs (gi) optimisées, respectivement, un nombre de variables (V) associées à la valeur (p1) respective.

6. Dispositif de commande suivant l'une des revendications précédentes,
**caractérisé**
**en ce qu'**il reçoit le critère (OK) d'optimisation d'un opérateur.

7. Programme de système, qui comprend un code (5) de machine, qui peut être élaboré par un dispositif (2) de commande d'une machine ayant au moins un axe (1), l'élaboration du code (5) de machine, par le dispositif (2) de commande, faisant que le dispositif (2) de commande est constitué suivant l'une des revendications précédentes.

8. Programme de système suivant la revendication 7, **caractérisé**
**en ce qu'**il est mis en mémoire sous une forme déchiffrable par ordinateur sur un support (4) de données.

9. Dispositif de commande d'une machine ayant au moins un axe (1), le dispositif de commande étant programmé par un programme (3) de système suivant la revendication 7.

10. Machine ayant au moins un axe (1) et un dispositif (2) de commande, le dispositif (2) de commande étant constitué suivant la revendication (9).
